Europäisches Patentamt

European Patent Office

Office européen des brevets

(11) Veröffentlichungsnummer: **0 379 020**
**A1**

(12) **EUROPÄISCHE PATENTANMELDUNG**

(21) Anmeldenummer: **90100282.4**

(22) Anmeldetag: **08.01.90**

(51) Int. Cl.⁵: **B27B 5/06**

(30) Priorität: **20.01.89 DE 3901538**

(43) Veröffentlichungstag der Anmeldung:
**25.07.90 Patentblatt 90/30**

(84) Benannte Vertragsstaaten:
**AT BE CH DE ES FR GB IT LI NL SE**

(71) Anmelder: **Jenkner, Erwin**
**Lindenstrasse 13**
**D-7261 Gechingen-Bergwald(DE)**

(72) Erfinder: **Jenkner, Erwin**
**Lindenstrasse 13**
**D-7261 Gechingen-Bergwald(DE)**

(74) Vertreter: **Becker, Maria, Dipl.-Phys.**
**Auf dem Haigst 29**
**D-7000 Stuttgart 70(DE)**

(54) **Schaltvorrichtung zum Ein- und Ausschalten von Plattensägen.**

(57) Es wird eine Schaltvorrichtung (28) zum Ein- und Ausschalten von Plattensägen (10) beschrieben. Üblicherweise werden derartige Sägen über ein Bedientableau gesteuert, das an der Bedienungsseite angeordnet ist. Um jedoch auch von einem hinter dem Werkstückaufgabe- oder -übernahmetisch oder in grosser Entfernung vom Bedientableau zwischen den Tischplatten liegenden Standort die Schaltvorrichtung (28) betätigen zu können, ist vorgesehen, dass die Schaltvorrichtung (28) tischfest ist und dass deren Betätigungsglied (34) unterhalb der einen Tischplatte (16) angeordnet ist, sich entlang einer der anderen gegenüberliegenden Tischplattenlängskanten (36, 38) erstreckt und zum Auslösen eines Schaltvorganges anzuheben ist. Für die Bedienungsperson erübrigt es sich damit, sich über die genaue Lage der Schaltvorrichtung (28) informieren zu müssen und es kann die Plattensäge (10) aus Sicherheitsgründen bei unvorhersehbaren Ereignissen sofort von jeder Stellung der Bedienungsperson aus ausgeschaltet werden.

Fig. 2

## Schaltvorrichtung zum Ein- und Ausschalten von Plattensägen

Die Erfindung betrifft eine Schaltvorrichtung zum Ein- und Ausschalten von Plattensägen mit einem wenigstens zwei in seitlichem Abstand voneinander angeordnete Tischplatten aufweisenden Werkstücktisch, die ein von einer Bedienungsperson von jedem Standort zwischen den Tischplatten oder von der hinteren Stirnseite einer der Tischplatten aus betätigbares Betätigungsglied aufweist.

Plattensägen sind üblicherweise über ein Bedientableau zu steuern, das an der Bedienungsseite, beispielsweise an einem Ausleger, angeordnet ist (Prospekt der Firma Holzma Maschinenbau GmbH, 7260 Calw-Holzbronn, "Plattenschneider HPP 01", Mai 1987).

Werden nun solche Plattensägen zum Aufteilen von Werkstückplatten mit einem Werkstückaufgabetisch oder mit einer Werkstückzuführvorrichtung und einem Werkstückübernahmetisch zum Zuführen und Aufteilen grossformatiger Werkstückplatten ausgestattet, ist das Bedienungstableau nur erreichbar, solange sich die Bedienungsperson von diesem noch in geeigneter Entfernung zwischen den beiden Tischplatten aufhalten kann.

Um jedoch auch von einem hinter dem Werkstückaufgabe- oder -übernahmetisch oder in grosser Entfernung vom Bedientableau zwischen den Tischplatten liegenden Standort aus die Plattensäge ein- und ausschalten zu können, ist diese üblicherweise mit einer zusätzlichen Schaltvorrichtung in Form eines mitnehmbaren, über ein Kabel mit der Plattensäge verbundenen Fußschalters auszustatten, der von der betreffenden Bedienungsperson unterhalb des Werkstückaufgabe- bzw. -übernahmetisches in die für sie jeweils günstigste Betätigungslage zu bringen ist.

Abgesehen von der hierzu notwendigen Handhabung des Fussschalters hat sich die Bedienungsperson vor einer notwendig werdenden Schalterbetätigung zunächst über dessen Lage zu informieren, da sie beim Plattenaufteilen ihren Standort ständig ändert. Im Ernstfall kann daraus eine wesentliche Verzögerung der Schalterbetätigung resultieren.

Der Erfindung liegt die Aufgabe zugrunde, diese Nachteile zu vermeiden und eine Schaltvorrichtung anzugeben, die von jeder Position zwischen den Tischplatten oder zumindest von der hinteren Stirnseite einer der Tischplatten aus siche erreich- und betätigbar ist.

Diese Aufgabe wird mittels einer Schaltvorrichtung der eingangs erläuterten Art erfindungsgemäss dadurch gelöst, dass die Schaltvorrichtung tischfest ist und dass deren Betätigungsglied unterhalb der einen Tischplatte angeordnet ist, sich entlang einer der einander gegenüberliegenden Tischplattenlängskanten erstreckt und zum Auslösen eines Schaltvorganges anzuheben ist.

Die erfindungsgemässe Anordnung der Schaltvorrichtung am Werkstückaufgabe- bzw. -übernahmetisch, bzw. die Ausbildung und Anordnung ihres Betätigungsgliedes an einer der Tischplatten, stellt sicher, dass es jederzeit von jedem Standort der Bedienungsperson zwischen den Tischplatten oder in grosser Entfernung vom Bedientableau zwischen den Tischplaten greif- bzw. betätigbar ist, zugleich aber bei Druckberührung desselben kein Schaltvorgang ausgelöst werden kann. Für die Bedienungsperson erübrigt sich damit vor einer eventuell notwendig werdenden Betätigung der Schaltvorrichtung, sich über deren genaue Lage informieren zu müssen; vielmehr ist sie in der Lage, bei unvorhersehbaren Ereignissen die Plattensäge sofort auszuschalten.

Das Betätigungsglied kann beispielsweise durch ein straff gespanntes Seil gebildet sein. Bevorzugt ist dasselbe in Art einer Stange ausgebildet und um eine zu seiner Längsachse parallele Achse verschwenkbar angeordnet. Dabei ist es günstig, wenn das Betätigungsglied, bezogen auf die Tischplattenlängskante, zum Auslösen eines Schaltvorganges nach aussen verschwenkbar ist. Es ist dadurch sichergestellt, dass auch dann kein Schaltvorgang ausgelöst werden kann, falls sich die Bedienungsperson über die Tischplattenlängskante beugen sollte, unterhalb der sich das Betätigungsglied befindet.

In der Zeichnung ist schematisiert ein Ausführungsbeispiel der Erfindung dargestellt. Es zeigen:

Fig. 1 eine in Richtung der Linie 1-1 der Fig. 2 gesehene Seitenansicht einer mit einer erfindungsgemässen Schaltvorrichtung ausgestatteten Tischplatte eines einer teilweise dargestellten Plattensäge vor- oder nachgeschalteten Werkstückaufgabe-bzw. -übernahmetisches,

Fig. 2 eine Ansicht des Werkstückaufgabe- bzw. -übernahmetisches in Richtung des Pfeiles A der Fig. 1 gesehen.

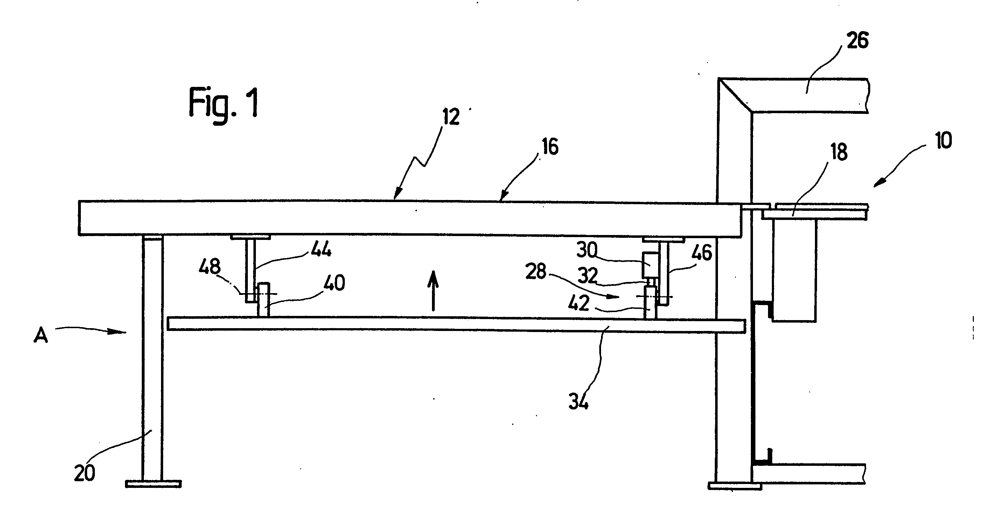

In Fig. 1 ist eine lediglich teilweise in Seitenansicht dargestellte Plattensäge als Ganzes mit 10 bezeichnet. Dieser ist bedienungsseitig ein als Ganzes mit 12 bezeichneter Werkstücktisch zugeordnet, der entweder ein Werkstückaufgabetisch zum Zuführen plattenförmiger Werkstücke in die Plattensäge 10 oder ein Werkstückübernahmetisch sein kann, auf welchen die anfallenden Plattenteile, beispielsweise programmgesteuert aufgeteilte Werkstückplatten, aufgeschoben werden. In diesem Falle erfolgt die Zuführung solcher Werkstückplatten mittels einer Werkstückvorschubvorrichtung, die an der dem Werkstücktisch 12 gegenüberliegenden Seite der Plattensäge 10 angebaut ist.

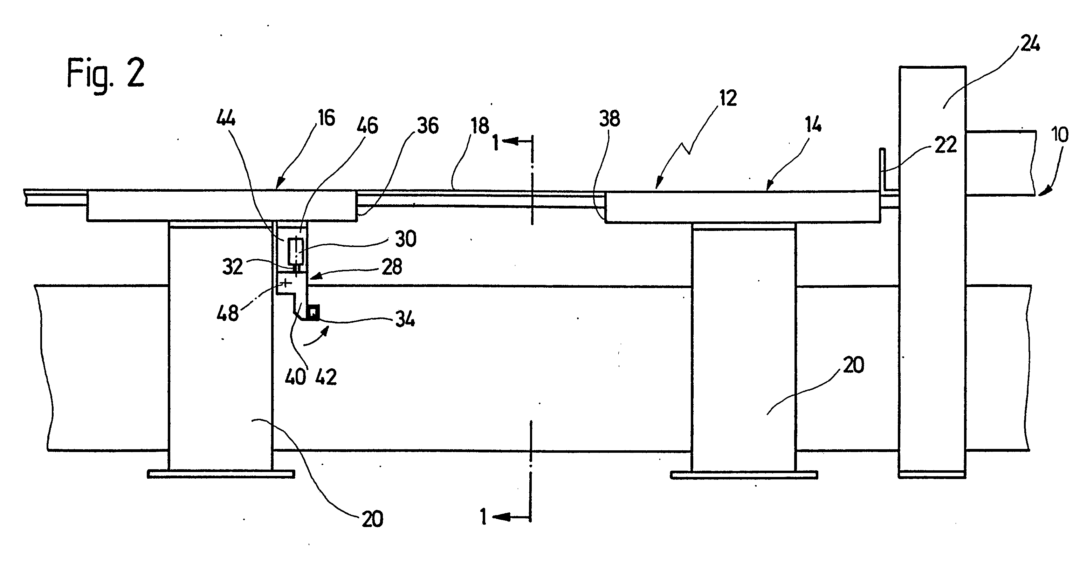

Der Werkstücktisch 12 weist beispielsweise zwei in seitlichem Abstand voneinander angeordnete Tischplatten 14 und 16 auf, die gemäss Fig. 1 mit ihrem rechten Ende am Maschinentisch 18 der Plattensäge und an ihrem linken Ende mittels eines Stützfusses 20 abgestützt sind. Der gemäss Fig. 2 rechten Tischplatte 14 ist dabei noch ein Seitenanschlag 22 zugeordnet. In Fig. 2 bezeichnet 24 einen der Gestellseitenständer der Plattensäge 10. Der andere ist in Fig. 1 mit 26 bezeichnet.

Dem Werkstücktisch 12 ist eine als Ganzes mit 28 bezeichnete elektrische Schaltvorrichtung zugeordnet, die, was nicht näher dargestellt ist, mit den Steuermitteln für den Antrieb der Plattensäge 10 verbunden ist. Diese Schaltvorrichtung ist derart ausgebildet und angeordnet, dass sie von der betreffenden Bedienungsperson, sofern sich diese zwischen den beiden Tischplatten 14 und 16 aufhält, von jedem Standort aus schnell und sicher zu betätigen ist. Zu diesem Zweck ist die Schaltvorrichtung 28 z.B. an den Werkstücktisch 12, beispielsweise unterhalb seiner Tischplatte 16, angebaut. Sie weist einen stationären elektrischen Schalter 30 auf, dessen Schaltglied 32 durch ein Betätigungsglied 34 betätigbar ist, das vorzugsweise durch ein stangenförmiges Hohlprofil gebildet und unterhalb der Tischplatte 16 im Bereich der Tischplattenlängskante 36 angeordnet ist, die der Tischplattenlängskante 38 der Tischplatte 14 gegenüberliegt. Das stangenförmige Betätigungsglied 34 erstreckt sich hierbei, wie Fig .1 zeigt, im wesentlichen über die gesamte Länge der Tischplatte 16, ist zu dieser parallel angeordnet und zur Betätigung des elektrischen Schalters 30 anzuheben. Hierzu ist das Betätigungsglied 34 mittels zweier im Abstand voneinander vorgesehener Lagerlaschen 40 und 42 an entsprechenden, an der Unterseite der Tischplatte 16 befestigten Lagerböcken 44 und 46 verschwenkbar gelagert, wobei an einem der Lagerböcke, bei spielsweise an dem der Plattensäge 10 nächstliegenden Lagerbock 46, der elektrische Schalter 30 derart befestigt ist, dass er durch die Lagerlasche 42 bei Verschwenken des stangenförmigen Betätigungsgliedes 34 gemäss Fig. 2 in Pfeilrichtung nach oben über dessen Schaltglied 32 betätigbar ist. Zu diesem Zweck ist das Betätigungsglied 34 um eine zu seiner Achse parallele Schwenkachse 48 an den Lagerböcken 44 und 46 verschwenkbar gelagert.

Durch diese Konstruktion wird erreicht, dass sich das stangenförmige Betätigungsglied 34 nach einer erfolgten Schalterbetätigung selbsttätig in seine untere Ausgangsstellung gemäss Fig. 2 zurückstellt und dass durch eine versehentliche Berührung, beispielsweise durch die Knie der Bedienungsperson, falls sich diese über die Tischplatte 16 beugen sollte, keine Schalterbetätigung erfolgen kann. Überdies ist das Betätigungsglied 34 von jedem Standort der Bedienungsperson zwischen beiden Tischplatten 14, 16 aus schnell und sicher zu handhaben, um die Plattensäge ein- und auszuschalten.

Sollte der Werkstücktisch 12 beispielsweise drei oder mehr in seitlichem Abstand voneinander vorgesehene Tischplatten umfassen, ist klar, dass zwischen jeweils zwei einander benachbarten Tischplatten eine Schaltvorrichtung 28 der erläuterten Art vorgesehen sein kann. Selbstverständlich könnten beim beschriebenen Ausführungsbeispiel auch beide Tischplatten 14 und 16 mit jeweils einer Schaltvorrichtung 28 ausgestattet sein.

## Ansprüche

1. Schaltvorrichtung zum Ein- und Ausschalten von Plattensägen mit einem wenigstens zwei in seitlichem Abstand voneinander angeordnete Tischplatten aufweisenden Werkstücktisch, die ein von einer Bedienungsperson von jedem Standort zwischen den Tischplatten oder von der hinteren Stirnseite einer der Tischplatten aus betätigbares Betätigungsglied aufweist,
**dadurch gekennzeichnet,**
dass die Schaltvorrichtung (28) tischfest ist, dass das Betätigungsglied (34) unterhalb der einen Tischplatte (16) angeordnet ist und dass der Abstand des Betätigungsgliedes (34) zur Tischplattenlängskante (36) in seiner Betätigungsstellung am kleinsten ist.

2. Schaltvorrichtung nach Anspruch 1, dadurch gekennzeichnet, dass das Betätigungsglied (34) stangenförmig ist.

3. Schaltvorrichtung nach Anspruch 2, dadurch gekennzeichnet, dass das Betätigungsglied (34) auf einer zu seiner Längsachse parallelen tischfesten Achse (48) gelagert ist.

4. Schaltvorrichtung nach Anspruch 3, dadurch gekennzeichnet, dass das Betätigungsglied (34), bezogen auf die Tischplattenlängskante (36) nach aussen verschwenkbar ist.

Fig. 1

EP 0 379 020 A1

Fig. 2

EP 0 379 020 A1

Europäisches
Patentamt

**EUROPÄISCHER RECHERCHENBERICHT**

Nummer der Anmeldung

EP 90100282.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | AT - B - 385 449 (SCHELLING) ---- | | B 27 B 5/06 |

RECHERCHIERTE SACHGEBIETE (Int Cl⁵)

B 27 B   5/00
B 27 G 19/00
B 27 G 21/00
B 26 D   5/00

Der vorliegende Recherchenbericht wurde für alle Patentansprüche erstellt.

| Recherchenort | Abschlußdatum der Recherche | Prüfer |
|---|---|---|
| WIEN | 09-03-1990 | TRATTNER |